# FASCICULE DE BREVET EUROPEEN

(11) **EP 0 632 771 B1**
(45) Date de publication et mention de la délivrance du brevet: **13.09.1995**
(21) Numéro de dépôt: 93905389.8
(22) Date de dépôt: 12.02.1993
(51) Int. Cl.: B60T 13/52

(54) **SERVOMOTEUR PNEUMATIQUE**
PNEUMATISCHER KRAFTVERSTÄRKER
PNEUMATIC SERVO

(30) Priorité: 31.03.1992 FR 9203863
(43) Date de publication de la demande: 11.01.1995
(73) Titulaire: ALLIEDSIGNAL EUROPE SERVICES TECHNIQUES, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ, Miguel, F-95100 Argenteuil (FR)
(86) Numéro de dépôt international: FR9300147
(87) Numéro de publication internationale: WO9319962

(56) Documents cités:
- GB-A- 2 247 502
- US-A- 3 768 366
- US-A- 4 800 799

## Description

La présente invention concerne les servomoteurs pneumatiques, et plus particulièrement du type de ceux qui sont utilisés pour fournir une assistance au freinage des véhicules automobiles.

Des servomoteurs de ce type sont bien connus, par exemple du document US-A-4 765 226, et comprennent, de façon classique, pour équiper un véhicule comportant un compartiment moteur et un habitacle séparés par un tablier, une enveloppe formée d'une coquille avant et d'une coquille arrière et à l'intérieur de laquelle se trouve un piston formé d'une partie tubulaire arrière supportant une jupe qui, à l'aide d'une membrane déroulante, définit une première chambre, ou chambre avant, reliée en permanence à une source de dépression et une seconde chambre, ou chambre arrière, reliée sélectivement à la chambre avant ou à l'atmosphère par un moyen de valve actionné par une tige de commande, l'enveloppe du servomoteur comportant des moyens de fixation du servomoteur au tablier du véhicule.

De tels servomoteurs, s'ils ont un fonctionnement satisfaisant, présentent néanmoins quelques inconvénients. C'est ainsi que lors d'une action de freinage, de l'air à la pression atmosphérique est aspiré vers la chambre arrière du servomoteur à travers un passage de valve de section réduite, après avoir traversé un filtre à air pour empêcher l'intrusion de poussières ou d'impuretés dans le servomoteur. De façon classique, comme par exemple dans le document précité, ce filtre à air est disposé dans la partie tubulaire arrière du piston, partie qui fait saillie hors de la coquille arrière du servomoteur à l'intérieur de l'habitacle du véhicule.

Lors d'une action de freinage, la présence du filtre à air ralentit le mouvement de l'air en direction de la chambre arrière du servomoteur et accroît par conséquent le temps de réponse de ce dernier. D'autre part, le passage de valve de section réduite ainsi que divers composants du servomoteur, comme par exemple des ressorts, se trouvent sur le trajet emprunté par l'air et génèrent différents bruits et sifflements dans l'habitacle, qui peuvent devenir gênants.

On a déjà proposé, comme dans US-A-5 031 507, de déplacer l'orifice d'aspiration de l'air pour lutter contre le bruit de fonctionnement du servomoteur. Une telle solution présente alors d'autres inconvénients, puisque des chicanes et des filtres supplémentaires sont introduits sur le trajet de l'air en mouvement, qui conduisent à des temps de réponse augmentés, parfois dans des proportions inacceptables.

La présente invention a donc pour but de concevoir un servomoteur dont le temps de réponse soit le plus faible possible, et dont le fonctionnement soit silencieux pour les passagers de véhicule.

Dans ce but, la présente invention propose un servomoteur du type rappelé ci-dessus, qui comprend une troisième chambre reliée en permanence à l'atmosphère à travers un élément filtrant, et sélectivement et de façon directe à la seconde chambre par le moyen de valve, cette troisième chambre ayant un volume au moins égal au volume minimal de la seconde chambre.

Une telle troisième chambre constitue ainsi une réserve d'air dans laquelle le servomoteur peut puiser lors de son fonctionnement, sans entrave au mouvement de l'air, et donc en diminuant le temps de réponse du servomoteur.

De façon avantageuse, cette troisième chambre est formée entre la coquille arrière du servomoteur et le tablier du véhicule, de sorte que l'orifice d'aspiration de l'air à la pression atmosphérique se trouve dans le compartiment moteur. Les bruits de fonctionnement du servomoteur se produisent donc dans ce compartiment, qui est par construction isolé phoniquement de l'habitacle.

D'autres buts, caractéristiques et avantages de la présente invention ressortiront clairement de la description qui suit de deux modes de réalisation donnés à titre d'exemple non limitatifs en référence aux dessins annexés sur lesquels :
- La **Figure 1** est une vue en coupe d'un servomoteur réalisé conformément à un premier mode de réalisation de l'invention ;
- La **Figure 2** est une vue en coupe selon la ligne A-A de la Figure 1 ;
- La **Figure 3** est une vue en coupe d'une variante de la vue de la Figure 2 ;
- La **Figure 4** est une vue en coupe d'une variante d'un détail de la Figure 1 ;
- La **Figure 5** est une vue en coupe partielle d'un servomoteur réalisé conformément à un second mode de réalisation de l'invention ; et
- La **Figure 6** est une vue en coupe d'une troisième chambre pour le servomoteur de la Figure 3.

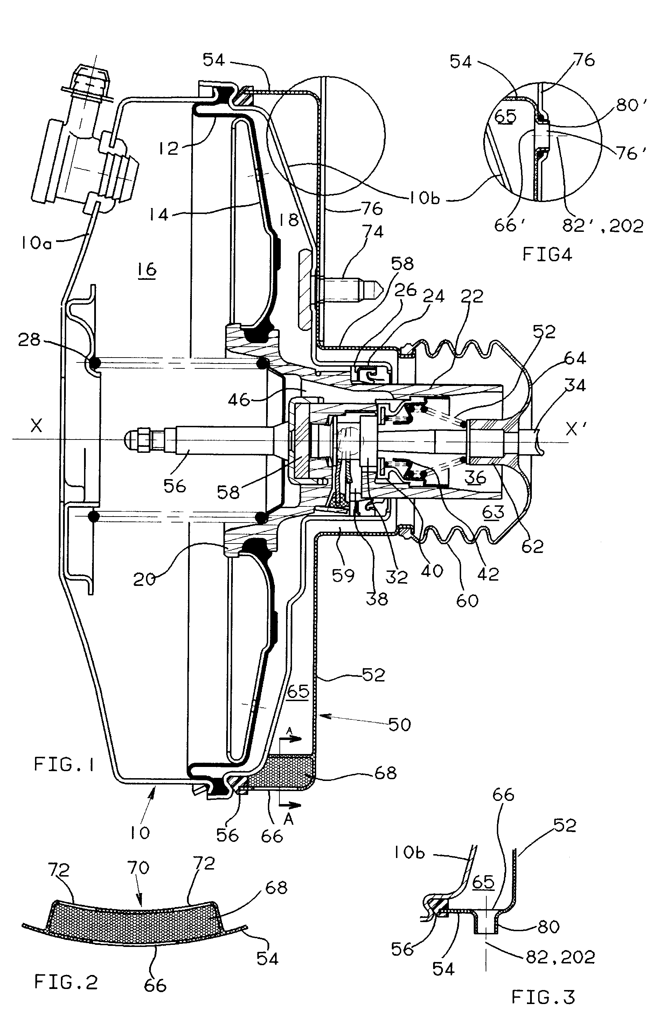

On reconnaît sur la Figure 1 une vue en coupe d'un servomoteur pneumatique d'assistance au freinage, prévu pour être placé de façon habituelle entre la pédale de frein d'un véhicule et le maître-cylindre commandant le circuit de freinage hydraulique du véhicule.

Par convention, on appelle "avant" du servomoteur la partie de ce dernier tournée vers le maître-cylindre et "arrière" du servomoteur la partie tournée vers la pédale de frein. Sur les Figures 1 et 3, l'avant est donc à gauche des Figures et l'arrière à droite.

Le servomoteur représenté sur la Figure 1 est bien connu et ne sera que brièvement décrit. Il comprend une enveloppe extérieure 10 formée par la réunion d'une coquille avant 10a et d'une coquille arrière 10b, présentant une symétrie de révolution autour d'un axe X-X'.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur de la membrane 12 est fixé de façon étanche sur l'enveloppe extérieure 10, par exemple à la jonction des coquilles avant 10a et arrière 10b. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X' du servomoteur. Ce piston creux 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé dans une partie centrale tubulaire 26 prolongeant vers l'arrière la paroi de la coquille arrière 10b.

Un ressort de compression 28 interposé entre le piston 20 et la coquille avant 10a maintient normalement le piston 20 et la jupe 14 dans une position arrière de repos illustrée sur la Figure, dans laquelle la chambre arrière 18 présente son volume minimal et la chambre avant 16 son volume maximal.

Dans sa partie centrale située entre la partie arrière tubulaire 22 et la partie avant dans laquelle sont fixées la membrane 12 et la jupe 14, le piston 20 présente un alésage dans lequel est reçu en coulissement un plongeur 32 présentant également une symétrie de révolution autour de l'axe X-X'.
L'extrémité avant d'une tige de commande 34 du servomoteur, disposée également selon l'axe X-X', est montée rotulante dans un alésage borgne formé à l'arrière du plongeur 32.

L'extrémité arrière (non représentée) de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire 22 du piston 20 peut communiquer vers l'avant avec la chambre arrière 18 au travers d'un passage radial 38 formé dans la partie centrale du piston lorsque des moyens d'assistance commandés par le plongeur 32 sont actionnés.

De façon classique, ces moyens d'assistance comprennent une valve à trois voies comportant un clapet annulaire 40 monté dans la partie tubulaire du piston et deux sièges de valve annulaires formés respectivement sur la partie centrale du piston 20 et sur le plongeur 32.

Le clapet 40 constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression tendant à déplacer le clapet 40 vers l'avant.

Un siège de valve annulaire est formé sur la face d'extrémité arrière du plongeur 32, et un siège de valve annulaire est formé sur la face d'extrémité arrière de la partie centrale du piston 20. Selon la position du plongeur 32 à l'intérieur du piston 20, cet agencement permet au clapet 40 d'être constamment en appui étanche avec l'un au moins des sièges de valve sous l'action du ressort de compression.

Un second passage 46 est formé dans la partie centrale du piston 20, approximativement parallèlement à son axe X-X', pour faire communiquer la chambre avant 16 du servomoteur avec l'espace annulaire autour du clapet 40, à l'intérieur de la partie tubulaire 22 du piston 20. Lorsque le plongeur 32 occupe sa position arrière de repos, les chambres avant 16 et arrière 18 du servomoteur communiquent entre elles par le passage 46 et le passage 38.

D'une manière elle aussi classique, au moins un organe de butée monté dans la partie centrale du piston 20 délimite la course axiale du plongeur 32 à l'intérieur de ce dernier. Le plongeur 32 est normalement maintenu dans la position arrière de repos définie par cet organe de butée au moyen d'un ressort de compression 52 interposé entre la coupelle 42 et une rondelle en appui sur un épaulement formé sur la tige de commande 34.

Dans sa partie centrale, le piston 20 comprend une face avant annulaire qui agit sur une face arrière d'une tige de poussée 56, au travers d'un disque de réaction 58 en un matériau déformable tel qu'un élastomère.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'effort effectué sur la pédale de frein par le conducteur a pour effet de faire avancer la tige de commande 34 et le plongeur 32 de façon à ce que le clapet 40, sous l'action du ressort 44, suive le siège du plongeur 32, jusqu'à ce qu'il vienne au contact du siège du piston ; les chambres avant 16 et arrière 18 du servomoteur sont alors isolées l'une de l'autre.

Dans une deuxième phase de l'actionnement du frein, le plongeur 32 est déplacé suffisamment vers l'avant pour que le clapet 40 soit en contact étanche avec le siège du piston et commence à s'éloigner du siège du plongeur. Dans ces conditions, la chambre arrière 18 du servomoteur est isolée de la chambre avant 16 et entre en communication avec l'espace annulaire 36.

La chambre arrière 18, qui communiquait auparavant avec la chambre avant 16 et se trouvait donc sous une pression réduite, aspire donc l'air à la pression atmosphérique à travers le passage radial 38 et le passage de valve de faible section entre le clapet 40 et le siège de plongeur. Il s'ensuit donc une entrave importante au passage de l'air due à la faiblesse de l'interstice du passage de valve 32-40 qui est nuisible pour le temps de réponse du servomoteur et qui crée des turbulences dans l'écoulement de l'air et des sifflements.

Le temps de réponse du servomoteur se trouve d'autant plus affecté que, dans les servomoteurs classiques tels que ceux des documents précités, un filtre à air est disposé à l'intérieur de la partie arrière de la partie tubulaire 22, pour éviter l'intrusion d'impuretés ou de poussières dans l'espace annulaire 36, et donc dans le servomoteur.

Ces inconvénients sont évités grâce au servomoteur réalisé conformément à l'invention. Celle-ci prévoit en effet de munir le servomoteur d'une troisième chambre constituant une réserve d'air dans laquelle pourra puiser le servomoteur lors de son fonctionnement sans entraver le mouvement de l'air avant son arrivée dans l'espace annulaire 36.

Dans l'exemple représenté sur la Figure 1, on voit que le servomoteur est pourvu d'un boîtier 50, présentant également une symétrie de révolution autour de l'axe X-X'. Ce boîtier 50 est formé d'une paroi 52 en forme de disque de diamètre extérieur sensiblement égal à celui de l'enveloppe du servomoteur et prolongée vers l'avant à son bord périphérique extérieur par une partie cylindrique avant 54. Cette partie périphérique cylindrique 54 est fixée de façon étanche à l'enveloppe 10, et plus précisément à la coquille arrière 10b du servomoteur dans l'exemple représenté, grâce à un joint 56. La paroi 52 en forme de disque est également prolongée vers l'arrière, au bord d'une ouverture centrale de diamètre supérieur à celui de la partie tubulaire 26 de la coquille arrière 10b, par une partie cylindrique arrière 58 de longueur axiale voisine de celle de la partie tubulaire 26 et délimitant avec cette dernière un espace annulaire 59. A l'extrémité arrière de cette partie cylindrique arrière 58 est fixée de façon étanche l'extrémité avant d'un soufflet tubulaire souple 60, dont l'extrémité arrière 62 est fixée de façon étanche sur la tige de commande 34. Le soufflet 60 a une longueur axiale supérieure à celle de la partie tubulaire arrière 22 du piston 20 et délimite avec cette dernière un espace annulaire 63. Il présente de plus une partie intermédiaire 64 raccordée à la partie arrière 62 et présentant vers l'avant une forme concave. On voit donc qu'une troisième chambre 65 est formée dans l'espace délimité par la face arrière de la coquille arrière 10b de l'enveloppe 10, la partie périphérique cylindrique 54 et la partie en forme de disque 52 du boîtier 50. Cette troisième chambre 65 est reliée en permanence et de façon directe avec l'espace annulaire 36 en amont du clapet annulaire 40 par les espaces annulaires 59 et 63.

Dans la paroi cylindrique 54 du boîtier 50 est formée une ouverture 66, en face de laquelle est encapsulé, dans le boîtier 50, un élément filtrant 68. La capsule 70 contenant le filtre 68, représentée en coupe sur la Figure 2, présente, sur sa paroi dirigée vers l'intérieur du boîtier 50, des ouvertures 72 décalées par rapport à l'ouverture 66 de façon à procurer un passage en chicane pour l'air traversant le filtre 68.

Lorsque le servomoteur est fixé sur le tablier du véhicule, le boîtier 50 est disposé de façon à ce que l'ouverture 66 soit dirigée vers le bas, pour éviter, grâce à l'action conjuguée du filtre 68 et du passage en chicane entre les ouvertures 66 et 72, l'intrusion de poussières ou de liquides à l'intérieur du boîtier 50, comme par exemple lors d'un lavage sous pression du véhicule ou du moteur.

Le servomoteur peut par exemple être fixé sur le tablier au moyen de vis 74, dont la tête est située à l'intérieur de la seconde chambre 18 et dont la partie filetée traverse de façon étanche la coquille arrière 10b, pour pénétrer dans une ouverture du tablier 76, derrière lequel elle est retenue par un moyen d'immobilisation tel qu'un écrou (non représenté). Dans l'exemple représenté, la vis 74 traverse la troisième chambre 65, avantageusement de façon étanche pour ne pas amoindrir, voire anéantir l'effet du filtre 68.

D'après les explications qui précèdent, on comprendra facilement le fonctionnement du servomoteur réalisé conformément à la présente invention. En effet, lors de l'actionnement du servomoteur, et plus particulièrement lors de la deuxième phase décrite plus haut, où la chambre arrière 18 est mise en communication avec l'espace annulaire 36, ce dernier est en communication constante et directe avec la troisième chambre 65. La chambre arrière 18 peut donc aspirer l'air à la pression atmosphérique présent dans les espaces annulaires 36, 63 et 59 et la troisième chambre 65 constituant une réserve d'air dans laquelle la chambre 18 peut puiser librement et directement sans l'entrave du filtre à air habituellement placé dans l'espace annulaire 36. Le temps de réponse du servomoteur s'en trouve donc diminué dans des proportions appréciables, et ce d'autant plus que le volume de la réserve d'air dans la chambre 65 et les espaces 59, 63 et 36 sera plus important.

Il a été observé, avec le servomoteur réalisé conformément à l'invention, que si l'amélioration du temps de réponse est déjà sensible pour des freinages où seul un ralentissement du véhicule est désiré, elle est par contre importante pour des freinages brusques ou intenses en vue de l'arrêt immédiat du véhicule. Dans cette optique, et pour ne pas augmenter exagérément l'encombrement du servomoteur ainsi équipé de la troisième chambre de réserve 65, tout en conservant l'avantage de cette réserve d'air, on donne à la troisième chambre 65 un volume au moins égal au volume minimal de la chambre arrière 18. Avec une telle configuration, lors d'un freinage important, la réserve d'air présente un volume suffisant pour alimenter tout le volume de la chambre arrière au début du freinage, avec un temps de réponse minimal et une assistance maximale, ce qui répond bien au désir du conducteur d'un freinage efficace et rapide.

De plus, cette construction de servomoteur selon l'invention permet de réduire et même d'annihiler les bruits de fonctionnement du servomoteur transmis dans l'habitacle du véhicule. En effet, dans l'exemple illustré sur la Figure 1, on a vu que le servomoteur est fixé par sa coquille arrière sur le tablier du véhicule. La troisième chambre est dans cet exemple formée entre la coquille arrière du servomoteur et le tablier du véhicule. De ce fait, l'orifice 66 formé dans la paroi cylindrique 54 du boîtier 50 débouche dans l'atmosphère présente dans le compartiment moteur du véhicule. Il s'ensuit que les bruits de fonctionnement du servomoteur sont confinés dans les espaces annulaires 36, 63 et 59 et dans la troisième chambre 65, d'où ils ne peuvent s'échapper que par l'orifice 72, le filtre 68 et l'ouverture 66 débouchant dans le compartiment moteur. Ce dernier faisant l'objet de tous les efforts des constructeurs automobiles en ce qui concerne l'isolation phonique par rapport à l'habitacle, les bruits de fonctionnement du servomoteur, d'intensité beaucoup moins grande que ceux du moteur thermique lui-même, seront donc inaudibles pour le conducteur et les passagers du véhicule.

De façon avantageuse grâce à l'invention, on réalise la partie intermédiaire 64 du soufflet 60 pour qu'elle présente, vers le servomoteur, une forme concave, raccordée de façon continue à la partie arrière cylindrique 62 du soufflet 60. De la sorte, lors du fonctionnement du servomoteur, l'air en provenance de la troisième chambre 65 par les espaces annulaires 59 et 63 est guidé sans discontinuité ni obstacle vers l'espace annulaire 36. Ce guidage de l'air participe à la fois à l'amélioration du temps de réponse et à la diminution des bruits en minimisant les turbulences de l'air en mouvement.

On voit donc bien qu'on a réalisé, conformément à l'invention, un servomoteur dont le temps de réponse est largement diminué puisqu'une réserve d'air est prévue en amont de la valve à trois voies et communique directement et sans entrave avec la chambre arrière du servomoteur lors de son fonctionnement, et dont le fonctionnement est silencieux puisque l'air dont le servomoteur a besoin pour son fonctionnement est aspiré directement dans le compartiment moteur.

Bien entendu, l'invention n'est pas limitée au mode de réalisation qui vient d'être décrit en référence aux Figures 1 et 2, mais est susceptible de recevoir de nombreuses variantes qui apparaîtront à l'homme du métier et qui rentrent dans son cadre. C'est ainsi qu'on a représenté Figure 3 une variante du mode de réalisation de la Figure 2. Selon cette variante, l'ouverture 66 pratiquée dans la partie cylindrique 54 du boîtier 50 n'est plus associée avec un filtre à air, mais est formée à l'intérieur d'une extension cylindrique tubulaire 80, s'étendant par exemple à l'extérieur du boîtier 50. Une conduite schématisée en 82, souple de préférence, a une de ses extrémités reliée à cette extension tubulaire 80, et son autre extrémité est associée à un élément filtrant, par exemple un élément du moteur utilisant de l'air filtré. On pourra par exemple raccorder la conduite 82 au carburateur du moteur si celui-ci en est équipé, et plus particulièrement en aval du filtre à air du carburateur. Lorsque la variante illustrée sur la Figure 3 est préférée, il n'est bien entendu pas nécessaire que l'ouverture 66 soit dirigée vers le bas, elle peut au contraire être disposée à tout endroit qui en facilitera l'accès. Un avantage présenté par cette variante est qu'au cours des opérations d'entretien du véhicule, il suffit de changer un seul filtre à air.

On pourra également prévoir, comme on l'a représenté sur la Figure 4 de réaliser l'ouverture 66 non plus dans la partie cylindrique 54 du boîtier 50, mais dans sa partie en forme de disque 52, avec une extension cylindrique tubulaire 80' traversant de façon étanche une ouverture 76' dans le tablier 76. Cette ouverture 76' pourra avantageusement être disposée à un endroit du tablier recouvert par le tableau de bord du côté habitacle de façon à ne pas réintroduire dans l'habitacle les bruits que l'on s'efforce d'y éviter. Il sera alors facile de fixer à l'extension tubulaire 80' une conduite 82' munie d'un filtre adéquat (non représenté) sous le tableau de bord.

Un avantage supplémentaire des variantes des Figures 3 et 4 est que le volume contenu dans les conduites 82 ou 82' contribue à augmenter la réserve d'air disponible pour le fonctionnement du servomoteur.

Un autre avantage peut être trouvé dans la combinaison des modes de réalisation des Figures 2 ou 3 avec celui de la Figure 4. La réserve d'air contenue dans la troisième chambre 65 peut alors être renouvelée à la fois par les ouvertures 66 et 66', chacune munie d'un filtre, dans la chambre 65 ou à l'extrémité de la conduite 82 et à celle de la conduite 82'. Il est également possible d'utiliser les ouvertures 66 et 66' pour renouveler la réserve d'air dans la troisième chambre 65 même en dehors des périodes de fonctionnement du servomoteur. Une circulation forcée d'air peut être établie dans la troisième chambre 65, l'air y étant par exemple introduit par la conduite 82, dans laquelle est inséré un ventilateur ou une pompe pneumatique (non représentés), et s'écoulant de façon naturelle par l'ouverture 66', laquelle peut alors ne pas être associée à un filtre à air. On obtient ainsi une réserve d'air dans la troisième chambre 65 pour le fonctionnement du servomoteur, dans laquelle l'air est en mouvement. Le fonctionnement du servomoteur tel qu'on l'a décrit précédemment est inchangé, si ce n'est que la légère suppression dans la troisième chambre 65 est un facteur supplémentaire de diminution du temps de réponse du servomoteur. De plus, la circulation d'air dans la troisième chambre 65 permet un refroidissement des parois de cette chambre, et en particulier de la coquille arrière 10b du servomoteur, ce qui peut être nécessaire dans le cas où cette dernière est réalisée en matière plastique, pour éviter sa déformation sous l'effet de la chaleur régnant dans le compartiment moteur.

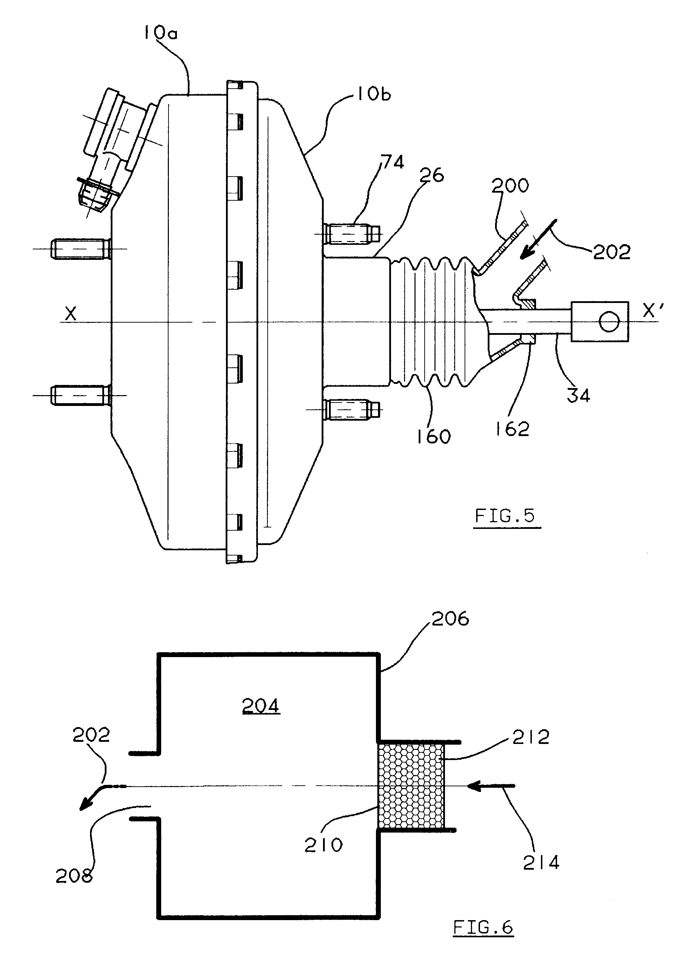

On a représenté sur les Figures 5 et 6 en coupe partielle un second mode de réalisation de l'invention, où la réserve d'air pour le fonctionnement du servomoteur est réalisée indépendamment de ce dernier. Le servomoteur est, de façon classique comme dans le document US-A-4 765 226 précité, formé de deux coquilles 10a et 10b, cette dernière comportant une partie centrale tubulaire arrière 26, abritant la partie tubulaire du piston d'assistance contenant la valve à trois voies. A l'extrémité arrière de cette partie tubulaire 26 est fixée de façon étanche l'extrémité avant d'un soufflet tubulaire souple 160, dont l'extrémité arrière 162 est fixée de façon étanche sur la tige de commande 34.

Le soufflet 160 est formé avec une extension tubulaire 200 s' étendant dans une direction faisant un axe avec l'axe X-X' du servomoteur. Cette extension tubulaire est destinée à être reliée, par une conduite schématisé en 202, souple de préférence à une troisième chambre reliée en permanence à l'atmosphère à travers un élément filtrant.

Cette troisième chambre peut par exemple être constituée de la troisième chambre 65 représentée sur la Figure 1. Dans ce cas, la conduite 202 et la conduite 82' sont confondues, la conduite 202 étant alors raccordée à l'extension cylindrique tubulaire 80' du boîtier 50 traversant le tablier 76, et le boîtier 50 comportant l'ouverture 66 avec son filtre 68 ou avec l'extension tubulaire 80. Dans ce cas également, le boîtier 50 ne comporte pas de partie arrière cylindrique 58, la paroi 52 en forme de disque du boîtier 50 étant fixée ou maintenue de façon étanche sur la coquille arrière 10b du servomoteur.

Cette troisième chambre peut également être constituée à l'intérieur 204 d'une enceinte 206 pourvue d'une ouverture 208 pour la relier par la conduite 202 au soufflet 160, et pourvue d'une autre ouverture 210 munie d'un filtre 212 en communication avec l'atmosphère 214. Une telle enceinte 204, n'étant pas soumise aux mêmes contraintes d'encombrement que le boîtier 50, pourra avoir toute forme et tout volume désiré pour faciliter son implantation dans le véhicule. Elle pourra également être raccordée à l'extension tubulaire 80 représentée à la Figure 3.

## Revendications

1. Servomoteur pneumatique d'assistance au freinage d'un véhicule comportant un compartiment moteur et un habitacle séparés par un tablier (76), le servomoteur comportant une enveloppe (10) formée d'une coquille avant (10a) et d'une coquille arrière (10b) et à l'intérieur de laquelle se trouve un piston (20) formé d'une partie tubulaire arrière (22) supportant une jupe (14) qui, à l'aide d'une membrane déroulante (12), définit une première chambre (16), ou chambre avant, reliée en permanence à une source de dépression et une seconde chambre (18), ou chambre arrière, reliée sélectivement à la chambre avant (16) ou à l'atmosphère par un moyen de valve (40) actionné par une tige de commande (34), l'enveloppe (10) du servomoteur comportant des moyens de fixation (74) du servomoteur au tablier (76) du véhicule, caractérisé en ce que, il comprend une troisième chambre (65,204) reliée en permanence à l'atmosphère à travers un élément filtrant (68,212) et sélectivement à la seconde chambre (18) par le moyen de valve (40), cette troisième chambre (65,204) ayant un volume au moins égal au volume minimal de la seconde chambre (18).

2. Servomoteur selon la revendication 1, caractérisé en ce que le volume de la troisième chambre (65,204) est partiellement délimité par un soufflet (60,160) fixé de façon étanche à la tige de commande (34).

3. Servomoteur selon la revendication 2, caractérisé en ce que la troisième chambre (65) est formée entre la coquille arrière (10b) du servomoteur et le tablier (76) du véhicule.

4. Servomoteur selon la revendication 3, caractérisé en ce que le volume de la troisième chambre (65) est également délimité par la face arrière de la coquille arrière (10b) du servomoteur et par la face avant d'un boîtier (50) fixé de façon étanche à l'enveloppe (10) du servomoteur et sur lequel est fixé de façon étanche le soufflet (60).

5. Servomoteur selon la revendication 4, caractérisé en ce que le boîtier (50) comporte une partie périphérique cylindrique (54) dont le diamètre est sensiblement égal à celui de l'enveloppe (10) du servomoteur, et qui est fixée de façon étanche à l'enveloppe (10) du servomoteur.

6. Servomoteur selon les revendications 4 et 5, caractérisé en ce que le boîtier (50) comporte sur sa partie périphérique cylindrique (54) une ouverture (66) associée à l'élément filtrant (68).

7. Servomoteur selon la revendication 6, caractérisé en ce que l'ouverture (66) est dirigée, lorsque le servomoteur est fixé au tablier (76) du véhicule, vers le bas.

8. Servomoteur selon la revendication 7, caractérisé en que l'élément filtrant (68) est disposé dans la troisième chambre (65) au voisinage immédiat de l'ouverture (66).

9. Servomoteur selon la revendication 4, caractérisé en ce qu'une ouverture (66,66') est formée à l'intérieur d'une extension cylindrique tubulaire (80,80') du boîtier (50), une extrémité d'une conduite (82,82',202) étant reliée à cette extension cylindrique tubulaire (80,80'), l'autre extrémité de la conduite (82,82',202) étant associée à l'élément filtrant (68,212).

10. Servomoteur selon la revendication 9, caractérisé en ce que l'ouverture (66) est formée dans la partie périphérique cylindrique (54) du boîtier (50).

11. Servomoteur selon la revendication 9, caractérisé en ce que l'extension cylindrique tubulaire (80') traverse de façon étanche une ouverture (76') dans le tablier (76).

12. Servomoteur selon l'une des revendications 2 à 11, caractérisé en ce que le soufflet possède une partie d'extrémité (62) fixée de façon étanche à la tige de commande (34) par l'intermédiaire d'une partie intermédiaire (64) présentant, dans la troisième chambre (65), une forme concave.

13. Servomoteur selon l'une quelconque des revendications précédentes, caractérisé en ce que la troisième chambre (65) est traversée de façon étanche par les moyens de fixation (74) du servomoteur au tablier du véhicule.

14. Servomoteur selon la revendication 2, caractérisé en ce que le soufflet (160) est également fixé de façon étanche sur un prolongement cylindrique (26) dirigé vers l'arrière de la coquille arrière (10b) du servomoteur et est formé avec une extension tubulaire (200) reliée par une canalisation (202) à la troisième chambre (65,204).

15. Servomoteur selon l'une des revendications précédentes caractérisé en ce que la troisième chambre (65) est formée avec deux ouvertures (66,66'), et en ce qu'une circulation forcée d'air est établie entre ces deux ouvertures (66,66').

## Claims

1. Pneumatic brake-booster for a vehicle comprising an engine compartment and a passenger space which are separated by an apron (76), the booster comprising a casing (10) formed of a front shell (10a) and of a back shell (10b) and inside which is located a piston (20) formed of a back tubular part (22) supporting a skirt (14) which, with the aid of an unrolling membrane (12), defines a first chamber (16), or front chamber, connected permanently to a source of partial vacuum and a second chamber (18), or back chamber, connected selectively to the front chamber (16) or to the atmosphere by a valve means (40) actuated by a control rod (34), the casing (10) of the booster comprising means (74) for securing the booster to the apron (76) of the vehicle, characterized in that, it comprises a third chamber (65, 204) connected permanently to the atmosphere through a filter element (68, 212) and selectively to the second chamber (18) by the valve means (40), this third chamber (65, 204) having a volume at least equal to the minimal volume of the second chamber (18).

2. Booster according to claim 1, characterized in that the volume of the third chamber (65, 204) is partially delimited by a bellows (60, 160) secured in leaktight manner to the control rod (34).

3. Booster according to claim 2, characterized in that the third chamber (65) is formed between the back shell (10b) of the booster and the apron (76) of the vehicle.

4. Booster according to claim 3, characterized in that the volume of the third chamber (65) is also delimited by the back face of the back shell (10b) of the booster and by the front face of a housing (50) secured in leaktight manner to the casing (10) of the booster and onto which the bellows (60) is secured in leaktight manner.

5. Booster according to claim 4, characterized in that the housing (50) comprises a cylindrical peripheral part (54) whose diameter is virtually equal to that of the casing (10) of the booster, and which is secured in leaktight manner to the casing (10) of the booster.

6. Booster according to claims 4 and 5, characterized in that the housing (50) comprises on its cylindrical peripheral part (54) an aperture (66) associated with the filter element (68).

7. Booster according to claim 6, characterized in that the aperture (66) is directed, when the booster is secured to the apron (76) of the vehicle, downward.

8. Booster according to claim 7, characterized in that the filter element (68) is disposed in the third chamber (65) in the immediate vicinity of the aperture (66).

9. Booster according to claim 4, characterized in that an aperture (66, 66') is formed inside a tubular cylindrical extension (80, 80') of the housing (50), one end of a pipe (82, 82', 202) being connected to this tubular cylindrical extension (80, 80'), the other end of the pipe (82, 82', 202) being associated with the filter element (68, 212).

10. Booster according to claim 9, characterized in that the aperture (66) is formed in the cylindrical peripheral part (54) of the housing (50).

11. Booster according to claim 9, characterized in that the tubular cylindrical extension (80') passes in leaktight manner through an aperture (76') in the apron (76).

12. Booster according to any of claims 2 through 11, characterized in that the bellows possess an end part (62) secured in leaktight manner onto the control rod (34) via an intermediate part (64) having, in the third chamber (65), a concave shape.

13. Booster according to any of the preceding claims, characterized in that the means (74) for securing the booster to the apron of the vehicle pass in leaktight manner through the third chamber (65).

14. Booster according to claim 2, characterized in that the bellows (160) are also secured in leaktight manner onto a cylindrical extension (26) directed towards the back of the back shell (10b) of the booster and is formed with a tubular extension (200) connected by piping (202) to the third chamber (65, 204).

15. Booster according to any of the preceding claims, characterized in that the third chamber (65) is formed with two apertures (66, 66'), and in that a forced circulation of air is established between these two apertures (66, 66').

## Patentansprüche

1. Pneumatischer Servomotor zur Bremsunterstützung bei einem Fahrzeug mit einem Motorraum und einem Innenraum, die durch eine Spritzwand (76) voneinander getrennt sind, wobei der Servomotor ein Gehäuse (10) umfaßt, das durch eine vordere Schale (10a) und eine hintere Schale (10b) gebildet ist und in dessen Inneren sich ein Kolben (20) befindet, der durch ein rohrförmiges hinteres Teil (22) gebildet ist, das eine Schürze (14) trägt, die mit Hilfe einer Abrollmembran (12) eine permanent mit einer Unterdruckquelle verbundene erste Kammer (16) oder vordere Kammer sowie eine zweite Kammer (18) oder hintere Kammer abgrenzt, die selektiv mit der vorderen Kammer (16) oder der Atmosphäre über ein von einer Steuerstange (34) betätigtes Ventilmittel (40) verbunden ist, wobei das Gehäuse (10) des Servomotors ein Mittel (74) zum Befestigen des Servomotors an der Spritzwand (76) des Fahrzeugs umfaßt, dadurch gekennzeichnet, daß er eine dritte Kammer (65, 204) umfaßt, die über ein Filterelement (68, 212) permanent mit der Atmosphäre und über das Ventilmittel (40) selektiv mit der zweiten Kammer (18) verbunden ist, wobei die dritte Kammer (65, 204) ein Volumen aufweist, welches wenigstens gleich dem minimalen Volumen der zweiten Kammer (18) ist.

2. Servomotor nach Anspruch 1, dadurch gekennzeichnet, daß das Volumen der dritten Kammer (65, 204) teilweise durch einen Balg (60, 160) begegrenzt ist, der in dichter Weise an der Steuerstange (34) befestigt ist.

3. Servomotor nach Anspruch 2, dadurch gekennzeichnet, daß die dritte Kammer (65) zwischen der hinteren Schale (10b) des Servomotors und der Spritzwand (76) des Fahrzeugs gebildet ist.

4. Servomotor nach Anspruch 3, dadurch gekennzeichnet, daß das Volumen der dritten Kammer (65) auch durch die vordere Seite der hinteren Schale (10b) des Servomotors und durch die vordere Seite einer Abdeckung (50) abgegrenzt ist, die in dichter Weise an dem Gehäuse (10) des Servomotors befestigt ist und an der in dichter Weise der Balg (60) befestigt ist.

5. Servomotor nach Anspruch 4, dadurch gekennzeichnet, daß die Abdeckung (50) einen zylindrischen Umfangsabschnitt (54) umfaßt, dessen Durchmesser im wesentlichen gleich demjenigen des Gehäuses (10) des Servomotors ist und der in dichter Weise an dem Gehäuse (10) des Servomotors befestigt ist.

6. Servomotor nach den Ansprüchen 4 und 5, dadurch gekennzeichnet, daß die Abdeckung (50) an ihrem zylindrischen Umfangsabschnitt (54) eine dem Filterelement (68) zugeordnete Öffnung (66) aufweist.

7. Servomotor nach Anspruch 6, dadurch gekennzeichnet, daß die Öffnung (66) nach unten gerichtet ist, wenn der Servomotor an der Spritzwand (76) des Fahrzeugs befestigt ist.

8. Servomotor nach Anspruch 7, dadurch gekennzeichnet, daß das Filterelement (68) in der dritten Kammer (65) in unmittelbarer Nähe der Öffnung (66) angeordnet ist.

9. Servomotor nach Anspruch 4, dadurch gekennzeichnet, daß im Inneren eines rohrförmigen zylindrischen Fortsatzes (80, 80') der Abdeckung (50) eine Öffnung (66, 66') gebildet ist, wobei ein Ende einer Leitung (82, 82', 202) mit diesem rohrförmigen zylindrischen Fortsatz (80, 80') verbunden ist und wobei das andere Ende der Leitung (82, 82', 202) dem Filterelement (68, 212) zugeordnet ist.

10. Servomotor nach Anspruch 4, dadurch gekennzeichnet, daß die Öffnung (66) in dem zylindrischen Umfangsabschnitt (54) der Abdeckung (50) ausgebildet ist.

11. Servomotor nach Anspruch 9, dadurch gekennzeichnet, daß der rohrförmige zylindrische Fortsatz (80') in dichter Weise eine Öffnung (76') in der Spritzwand (76) durchquert.

12. Servomotor nach einem der Ansprüche 2 bis 11, dadurch gekennzeichnet, daß der Balg einen Endabschnitt (62) aufweist, der in dichter Weise an der Steuerstange (34) mittels eines Zwischenabschnittes (64) befestigt ist, der in der dritten Kammer (65) eine konkave Gestalt aufweist.

13. Servomotor nach einem der vorhergehenden Ansprüche, dadurch gekennzeichnet, daß die dritte Kammer (65) in dichter Weise von dem Mittel (74) zur Befestigung des Servomotors an der Spritzwand des Fahrzeugs durchquert ist.

14. Servomotor nach Anspruch 2, dadurch gekennzeichnet, daß der Balg (160) in dichter Weise auch an einer nach hinten gerichteten zylindrischen Verlängerung (26) der hinteren Schale (10b) des Servomotors befestigt und mit einem rohrförmigen Fortsatz (200) ausgebildet ist, der über ein Leitungssystem (202) mit der dritten Kammer (65, 204) verbunden ist.

15. Servomotor nach einem der vorhergehenden Ansprüche, dadurch gekennzeichnet, daß die dritte Kammer (65) mit zwei Öffnungen (66, 66') ausgebildet ist und daS zwischen diesen beiden Öffnungen (66, 66') eine Zwangszirkulation von Luft ausgebildet ist.
